# EUROPÄISCHE PATENTSCHRIFT

(11) **EP 2 893 629 B1**
(45) Veröffentlichungstag und Bekanntmachung des Hinweises auf die Patenterteilung: **27.04.2016**
(21) Anmeldenummer: 13753896.3
(22) Anmeldetag: 03.09.2013
(51) Int. Cl.: H02M 7/5395, H02M 1/12

(54) **VERFAHREN UND VORRICHTUNG ZUM BETREIBEN EINER STROMERZEUGUNGSEINRICHTUNG MIT WECHSELRICHTER**
METHOD AND APPARATUS FOR OPERATING A CURRENT GENERATION DEVICE COMPRISING AN INVERTER
PROCÉDÉ ET DISPOSITIF PERMETTANT DE FAIRE FONCTIONNER UN APPAREIL DE PRODUCTION DE COURANT POURVU D'UN ONDULEUR

(30) Priorität: 03.09.2012 DE 102012108164
(43) Veröffentlichungstag der Anmeldung: 15.07.2015
(73) Patentinhaber: Woodward Kempen GmbH, 47906 Kempen (DE)
(72) Erfinder: SCHMITZ, Manfred, 41189 Mönchengladbach (DE)
(74) Vertreter: Cohausz & Florack
(86) Internationale Anmeldenummer: PCT/EP2013/068204
(87) Internationale Veröffentlichungsnummer: WO 2014/033331

(56) Entgegenhaltungen:
- EP-A2- 1 914 874
- DE-A1- 19 602 847

## Beschreibung

Die Erfindung betrifft ein Verfahren zum Betreiben einer Stromerzeugungseinrichtung mit einem Wechselrichter, ein Computerprogrammprodukt zur Steuerung einer Stromerzeugungseinrichtung mit Wechselrichter und eine Stromerzeugungseinrichtung.

Als Wechselrichter werden elektrische Schaltungen bezeichnet, welche eine Gleichspannung in eine Wechselspannung bzw. Gleichstrom in einen Wechselstrom umrichten können. Abhängig vom Leistungsfluss kann ein solcher Wechselrichter auch als Gleichrichter betrieben werden, sofern eine Wechselspannung in eine Gleichspannung bzw. ein Wechselstrom in einen Gleichstrom umgerichtet wird. Durch den Ausbau der regenerativen Stromerzeugung, also durch die Inbetriebnahme von Windenergieanlagen, Photovoltaikanlagen aber auch Wasserspeicherkraftwerken, werden zunehmend Stromerzeugungseinrichtungen ans Netz gebracht, welche den erzeugten Strom über Wechselrichter ins Stromnetz einspeisen. Dies gilt auch für dezentral Strom erzeugende Blockheizkraftwerke. Die Wechselrichter erzeugen dabei üblicherweise aus einem Gleichspannungskreis, auch als Gleichspannungszwischenkreis bezeichnet, gespeist eine phasenrichtige Netzspannung zur Einspeisung ins Stromnetz. Der sogenannte Gleichspannungszwischenkreis kann seinerseits über einen als Gleichrichter betriebenen Wechselrichter gespeist werden, welcher beispielsweise mit einem Strom erzeugenden Generator, wie im Falle einer Windenergieanlage, verbunden ist. Durch den Einsatz von Transistoren, vorzugsweise IGBTs können die Wechselrichter über eine Pulsweitenmodulation (PWM) mit einer spezifischen Schaltfrequenz präzise gesteuert werden. Durch die Schaltvorgänge der IGBTs werden jedoch unerwünschte Oberschwingungen erzeugt, welche im eingespeisten Strom oder der Spannung messbar sind. Typische Oberschwingungen treten bei einer Frequenz auf, welche einem Einfachen oder Vielfachen der Schaltfrequenz zuzüglich oder abzüglich einem Einfachen oder Vielfachen der Grundfrequenz, zumeist 50 Hz, entspricht. Diese um die Schaltfrequenz auftretenden Oberschwingungen werden auch als Seitenbänder bezeichnet. Ihre Amplitudenmaxima haben diese unerwünschten Ströme oder Spannungen im Bereich der Schaltfrequenz und deren Vielfachen abzüglich oder zuzüglich einem Einfachen der Grundfrequenz. Oberschwingungen belasten das Netz und Verbraucher. Sie müssen aus diesem Grunde vermieden oder deutlich reduziert werden. Eine Möglichkeit zur Befilterung ist die Verwendung von speziell an die Schaltfrequenz angepassten Filtern, welche zwischen der Stromerzeugungseinrichtung und dem Einspeisepunkt vorgesehen sind, um spezifische Vorgaben der Netzanbindung zu erfüllen. Eine Vorgabe für den Betrieb solcher Stromerzeugungseinrichtungen am Netz ist beispielsweise die "technische Richtlinie Erzeugungsanlagen am Mittelspannungsnetz, Ausgabe Juni 2008 des Bundesverbands der Energie- und Wasserwirtschaft e.V. (BDEW)", welche Kennzahlen für die zulässigen Anteile von Oberschwingungen abhängig von deren Frequenz vorgibt. So werden über diese Richtlinie abhängig von der zur Verfügung stehenden Kurzschlussleistung des Netzanschlusspunktes die relativen Anteile der Oberschwingungen exakt vorgegeben. Grundsätzlich kann über die Wahl einer hohen Schaltfrequenz der Anteil der Oberschwingungen in niedrigen Frequenzbereichen begrenzt werden, da unterhalb der Schaltfrequenz keine Oberschwingungen erzeugt werden. Hinzu kommt, dass sowieso vorhandenen Impedanzen (z.B. der Maschine oder Netzdrossel) mit steigender Frequenz eine zunehmende Dämpfung bewirken. Filter für höhere Frequenzen können demnach tendenziell kleiner ausfallen. Beispielsweise könnte die Schaltfrequenz der Wechselrichter in einen Frequenzbereich oberhalb von 10kHz gelegt werden, so dass zum einen keine Oberschwingungen unterhalb von 10kHz erzeugt werden und zum anderen die vorhandenen Impedanzen eine ausreichend starke Dämpfung bewirken. Allerdings erzeugt eine höhere Schaltfrequenz im Wechselrichter auch eine höhere Schaltverlustleistung, so dass es zu einer stärkeren Erwärmung des Wechselrichters kommt. Folglich ist die Abgabe der Leistung bei höheren Schaltfrequenzen daher begrenzt. Mit der Problematik des Einspeisens von Oberschwingungen in Netze befasst sich auch die US-Patentanmeldung US 2011/0260547 A1. Zur Vermeidung der Einspeisung von Oberschwingungen schlägt die US-Patentanmeldung vor, durch den Einsatz mehrerer in ihrer Phase zueinander exakt gesteuerter Wechselrichter die erzeugten Oberschwingungen durch destruktive Interferenz zu eliminieren und nahezu oberschwingungsfreien Strom einzuspeisen. Hierzu müssen mehrere Wechselrichter aber exakt in ihrer Phasenlage zueinander betrieben werden. Dies ist nur mit mehreren Wechselrichtern und einer komplizierten übergeordneten Steuerung möglich und daher aufwändig.

Von diesem Stand der Technik ausgehend hat sich die vorliegende Erfindung die Aufgabe gestellt, ein Verfahren zum Betreiben einer Stromerzeugungseinrichtung mit einem Wechselrichter vorzuschlagen, mit welchem auf einfache Weise der Anteil an Oberschwingungen begrenzt wird, so dass Vorgaben, beispielsweise der Netzbetreiber, eingehalten werden und dennoch eine optimale Leistungsabgabe erfolgt. Darüber hinaus ist es Aufgabe der vorliegenden Erfindung ein Computerprogrammprodukt zur Steuerung einer Stromerzeugungseinrichtung mit Wechselrichter, eine Vorrichtung zur Steuerung einer Stromerzeugungseinrichtung mit einem Wechselrichter sowie Stromerzeugungseinrichtungen vorzuschlagen.

Gemäß einer ersten Lehre der vorliegenden Erfindung wird die oben gezeigte Aufgabe dadurch gelöst, dass der Wechselrichter mindestens mit zwei verschiedenen Schaltfrequenzen betreibbar ist, wobei das Verhältnis der Betriebsdauer des Wechselrichters mit einer ersten Schaltfrequenz zur Betriebsdauer des Wechselrichters mit mindestens einer weiteren Schaltfrequenz von mindestens einer Stellgröße abhängig gewählt wird und als Stellgröße der Anteil an auftretenden Oberschwingungen verwendet wird.

Um den Anteil der Oberschwingungen mit niedrigerer Frequenz zu begrenzen, wird der Wechselrichter mit einer weiteren Schaltfrequenz, beispielsweise einer höheren Schaltfrequenz betrieben. Der Anteil der Oberschwingungen bei der niedrigeren Schaltfrequenz geht dadurch zurück. Über die Auswahl des Verhältnisses zwischen den Betriebsdauern des Wechselrichters mit den jeweiligen Schaltfrequenzen wird ermöglicht, dass die zulässige Einspeisung von Oberschwingungen maximal ausgeschöpft werden kann. Dies erfolgt durch Anpassung des Verhältnisses der Betriebsdauern des Wechselrichters mit einer ersten Schaltfrequenz zur Betriebsdauer des Wechselrichters mit mindestens einer weiteren Schaltfrequenz abhängig vom auftretenden Anteil an Oberschwingungen.

Vorzugsweise wird gemäß einer weiteren Ausgestaltung die Stellgröße unter Verwendung eines Modells bestimmt. Ein Modell beinhaltet beispielsweise mindestens einen Algorithmus und/oder mindestens eine Kennlinie, so dass der Wert der Stellgröße beispielsweise durch den Algorithmus berechnet bzw. bestimmt oder an der mindestens einen Kennlinie abgelesen werden kann. Als Kennlinie wird beispielsweise eine Zuordnung von Werten der Stellgröße oder einer für die Ableitung der Stellgröße verwendete Größe zu einer beliebigen Variablen verstanden. Eine Mehrzahl an Kennlinie oder mehrdimensionale Kennfelder können auch im Modell verwendet werden.

Gemäß einer nächsten Ausgestaltung erfolgt die Bestimmung des Anteils an Oberschwingungen direkt durch eine Messung oder indirekt durch Betriebsparameter des Wechselrichters. Über eine Strom- oder Spannungsmessung und deren Auswertung beispielsweise über eine Fast-Fourier-Transformation kann der Oberschwingungsanteil als Oberschwingungspegel im erzeugten Strom direkt ermittelt werden und zur Steuerung der Betriebszustände verwendet werden. Eine einfachere Variante stellt die indirekte Bestimmung des Anteils der Oberschwingungen durch Betriebsparameter des Wechselrichters dar, da keine Messtechnik hierzu erforderlich ist.

Gemäß einer weiteren Ausgestaltung des Verfahrens wird als Betriebsparameter für den Anteil der Oberschwingungen der Aussteuerungsgrad des Wechselrichters verwendet und die Abhängigkeit des Anteils zur Laufzeit berechnet oder über eine vordefinierte Kennlinie bestimmt. Der Aussteuerungsgrad, d.h. das Verhältnis der Ausgangsspannung zur Zwischenkreisspannung zeigt einen klaren Einfluss auf die Erzeugung von Oberschwingungen durch den Wechselrichter im Ausgangsstrom bzw. in der Ausgangsspannung. Diese Abhängigkeit wird ausgenutzt, um über die Auswahl der Betriebsdauern gezielt Oberschwingungen mit spezifischen Frequenzen zu reduzieren und Oberschwingungen in anderen Frequenzbereichen zuzulassen, so dass beispielsweise Netzanschlussbestimmungen optimal erfüllt werden können. Da die Netzanschlussbedingungen insbesondere auch Vorgaben für die Oberschwingungsanteile der erzeugten Ströme enthalten, werden die Oberschwingungsstrompegel einfach über die Netzimpedanz berechnet. Hierzu kann die Netzimpedanz jeweils kontinuierlich, periodisch oder auch nur einmalig neu festgelegt werden.

Das Verhältnis der Betriebsdauern kann gemäß einer Ausgestaltung des erfindungsgemäßen Verfahrens Werte von 0 - 100%, vorzugsweise 30% bis 70 % annehmen. Das bedeutet, dass der Wechselrichter sowohl nur mit einer ersten Schaltfrequenz als auch nur mit einer zweiten Schaltfrequenz dauerhaft betrieben werden kann. Darüber hinaus wird in der Regel der Wechselrichter mit beiden Schaltfrequenzen betrieben, deren Betriebsdauerverhältnis zueinander zwischen 0% und 100%, bevorzugt zwischen 30% und 70% liegt. Denkbar ist natürlich, dass eine Mehrzahl an Schaltfrequenzen, also beispielsweise drei Schaltfrequenzen gewählt werden kann, wobei das Verhältnis der Betriebsdauern des Wechselrichters mit einer ersten Schaltfrequenz zur Betriebsdauer des Wechselrichters mit den beiden übrigen Schaltfrequenzen dann entsprechend die Werte 0 - 100 % annehmen kann. Die Betriebsdauern der weiteren beiden Schaltfrequenzen können dann ebenfalls noch mal untereinander spezifisch eingestellt werden, um beispielsweise die technischen Vorgaben zur Einspeisung von Oberschwingungen erfüllen zu können.

Gemäß einer weiteren Ausgestaltung ist das Verhältnis der Betriebsdauern des Wechselrichters mit verschiedenen Schaltfrequenzen konstant oder es wird innerhalb diskreter Zeiträume periodisch oder kontinuierlich bestimmt. Eine periodische Bestimmung bedeutet hier, dass für einen vorgebbaren Zeitraum, beispielsweise eine Sekunde, das Verhältnis der Betriebsdauern bestimmt und beibehalten wird, während bei einer kontinuierlichen Bestimmung des Betriebsdauerverhältnisses kein Zeitraum vorgegeben wird, sondern alleine in Abhängigkeit der Verarbeitungsgeschwindigkeit der Regelung das Betriebsdauerverhältnis stetig neu bestimmt wird. Eine konstante Einstellung des Verhältnisses der Betriebsdauern mit verschiedenen Schaltfrequenzen ist besonders einfach. Eine periodische oder kontinuierliche Bestimmung des Verhältnisses der Betriebsdauern bzw. dessen Änderung erfordert Regel- oder Messaufwand, welcher jedoch eine Anpassung des Wechselrichters an sich ändernde Bedingungen ermöglicht.

Gemäß einer weiteren Ausgestaltung des Verfahrens wird die Stellgröße unter Verwendung eines Modells bestimmt, welches zusätzlich abhängig von einem oder einer Gruppe der folgenden Parameter:
- Strom,
- Spannung,
- Verlustleistung des Wechselrichters,
- Kühlwassertemperatur,
- IGBT-Temperatur,
- Geräuschemission des Wechselrichters,
- Filterströme,
- Sollwertvorgaben des Wechselrichters,
- Netzparameter
- Drehzahl oder Schlupf des Generators
ist.

Das Modell beinhaltet dann vorzugsweise mindestens einen Algorithmus und/oder mindestens eine Kennlinie, welche zur Bestimmung der Stellgröße einen oder eine Gruppe der genannten Parameter heranziehen. Anhand der genannten Parameter wird deutlich, dass über das erfindungsgemäße Verfahren der Wechselrichter sehr spezifisch an einzelne Bedingungen angepasst werden kann. Insbesondere ist es möglich unterschiedliche Betriebszustände des Wechselrichters zu berücksichtigen und den Wechselrichter durch Auswahl verschiedener Schaltfrequenzen und ihrer Betriebsdauern in einem optimierten Betriebszustand zu betreiben. Bei der Verwendung von Oberschwingungen als Parameter kann eine verbesserte Anpassung an die diesbezüglichen Vorgaben der Netzbetreiber erreicht werden. Beispielsweise kann der Wechselrichter aber auch in Abhängigkeit der Leistung mit den mindestens zwei verschiedenen Schaltfrequenzen betrieben werden. So kann berücksichtigt werden, dass bei Volllast eine relativ niedrige Schaltfrequenz gewählt wird, so dass die Schaltverlustleistung nicht zu groß wird. Eine Berücksichtigung eines Stroms, z.B. des Stroms des rotor- oder netzseitigen Wechselrichters oder des von der Erzeugeranlage in das Netz eingespeisten Stroms, einer Spannung, z.B. der Netzspannung, oder der Verlustleistung des Wechselrichters ermöglicht einen effizienten Betrieb des Wechselrichters. Kühlwassertemperaturen und IGBT-Temperaturen können berücksichtigt werden, um beispielsweise Einflüsse der Umgebungstemperaturen zu berücksichtigen und einen sicheren Betrieb zu gewährleisten. Gleichzeitig sind die Schaltfrequenzen auch Ursache für Geräuschemissionen des Wechselrichters, so dass die Geräuschemissionen beeinflusst werden können, sofern diese zur Bestimmung der Stellgröße des Verhältnisses der Betriebsdauern des Wechselrichters herangezogen werden. Die Auswahl der Betriebsdauern der Schaltfrequenzen zueinander ermöglicht auch die Filterströme in den jeweiligen Netzfiltern zu begrenzen. Werden Sollwertvorgaben des Wechselrichters genutzt, so ist ein Betrieb ohne zusätzliche Messungen möglich. Beispielsweise kann als Sollwertvorgabe die Sollleistungsabgabe des Wechselrichters herangezogen werden, um die Stellgröße und damit die Betriebsdauer des Wechselrichters mit verschiedenen Schaltfrequenzen zu bestimmen. Die Berücksichtigung von Netzparametern wie z.B. der Netzimpedanz ermöglicht die Vermeidung von unerwünschten Resonanzen. Schließlich können grade bei Erzeugeranlagen mit doppeltgespeistem Generator die Drehzahl oder der Schlupf des Generators berücksichtigt werden, da hiervon die Aussteuerung des maschinenseitigen Wechselrichters und somit die erzeugten Oberschwingungen abhängig sind. Denkbar ist auch, dass eine Kombination der genannten Parameter verwendet wird, um die Stellgröße zur Einstellung der Betriebsdauern der verschiedenen Schaltfrequenzen zueinander zu bestimmen. Denkbar ist aber auch, dass weitere Parameter, welche hier bisher nicht genannt sind, herangezogen werden, um die Stellgröße zu bestimmen.

Eine besonders einfache Möglichkeit die Stellgröße abhängig von einem der oben genannten Parameter vorzugeben, wird dadurch erreicht, dass die Stellgröße durch ein Modell, welches mindestens eine Kennlinie mindestens eines Parameters oder ein Kennfeld mehrerer Parameter umfasst, bestimmt wird. Wie bereits ausgeführt, können auch mehrdimensionale Kennfelder verwendet werden, um eine Kennlinienschar abhängig von mehreren Parametern zu nutzen. Durch Auslesen der zugehörigen Werte der Kennlinie zur Bestimmung der Stellgröße kann der Rechenaufwand zur Steuerung des Wechselrichters insofern reduziert werden. Als Parameter für die Kennlinien oder Kennfelder eignen sich, wie bereits ausgeführt, beispielsweise die Oberschwingungen, ein Strom, eine Spannung, die Verlustleistung des Wechselrichters, die Kühlwassertemperatur, die IGBT-Temperatur, die Geräuschemission des Wechselrichters, die Filterströme, Sollwertvorgaben, Netzparameter und die Drehzahl oder der Schlupf des Generators oder eine Kombination der genannten Parameter.

Gemäß einer weiteren Ausgestaltung des Verfahrens wird mindestens ein Parameter durch eine Messung erfasst. Hierdurch wird erreicht, dass über die Messung und unter Verwendung der Kennlinien oder Algorithmen des Modells eine exakte Kontrolle in Bezug auf die Einstellung der Betriebsdauern der verschiedenen Schaltfrequenzen des Wechselrichters anhand des aktuellen Zustands des Wechselrichters durchgeführt werden kann. Vorzugsweise werden diese Messungen mit einem Vielfachen der Schaltfrequenz des Wechselrichters durchgeführt, um eine möglichst optimale Nachführung des Wechselrichters zu erreichen.

Gemäß einer vorteilhaften Ausgestaltung des Verfahrens sind die erste und die weiteren Schaltfrequenzen ganzzahlige Vielfache voneinander, so dass sich die Auslegung der Netzfilter besonders einfach gestaltet.

Stromerzeugungseinrichtungen, insbesondere Windenergieanlagen, weisen häufig Generatoren auf, welche aufgrund der schwankenden Drehzahl keine frequenzkonstante Spannung erzeugen können, so dass ein Wechselrichter sowohl maschinenseitig, d.h. beispielsweise rotorseitig als auch netzseitig vorgesehen ist. Das erfindungsgemäße Verfahren kann vorteilhaft sowohl auf die rotorseitigen als auch auf die netzseitigen Wechselrichter angewendet werden, um einen optimalen Betrieb der Wechselrichter in Bezug auf die Einspeisung von elektrischer Leistung in ein Netz anzupassen.

Gemäß einer zweiten Lehre der vorliegenden Erfindung wird die oben aufgezeigte Aufgabe durch ein Computerprogrammprodukt erfüllt, mit welchem eine Stromerzeugungseinrichtung mit Wechselrichter erfindungsgemäß gesteuert werden kann. Das Computerprogrammprodukt ermöglicht bei dessen Ausführung, dass eine Stromerzeugungseinrichtung mit dem erfindungsgemäßen Verfahren betrieben werden kann.

Gemäß einer dritten Lehre der vorliegenden Erfindung wird die oben aufgezeigte Aufgabe durch eine Vorrichtung zur Steuerung einer Stromerzeugungseinrichtung mit Wechselrichter nach dem erfindungsgemäßen Verfahren dadurch gelöst, dass diese Mittel zur Ansteuerung des Wechselrichters mit einer ersten und mindestens einer weiteren Schaltfrequenz umfassen und Mittel zur Einstellung und Änderung des Verhältnisses der Betriebsdauer mit einer ersten Schaltfrequenz zur Betriebsdauer mit mindestens einer weiteren Schaltfrequenz abhängig von einer Stellgröße aufweist, wobei durch die Mittel zumindest der Anteil der auftretenden Oberschwingungen als Stellgröße verwendbar ist. Durch die Wahl der Betriebsdauern des Wechselrichters mit den verschiedenen Schaltfrequenzen kann, wie bereits ausgeführt, eine sehr gute Anpassung der Stromerzeugungseinrichtung mit Wechselrichter an Netzrichtlinien aber auch an andere Betriebsbedingungen des Wechselrichters erreicht werden. Insbesondere kann dadurch mit einfachen Mitteln die Einspeisung von Oberschwingungen in das Netz optimal an Vorgaben, z.B. des Netzbetreibers oder des Anlagenbetreibers, angepasst werden.

Gemäß einer ersten Ausgestaltung der erfindungsgemäßen Vorrichtung sind Mittel zur Bestimmung der Stellgröße unter Verwendung eines Modells vorgesehen. Das Modell kann dabei, wie bereits ausgeführt, mindestens einen Algorithmus oder mindestens eine Kennlinie zur Bestimmung der Kennlinie aufweisen. Es kann zur Abbildung bestimmter Betriebsmodi des Wechselrichters dienen oder auch andere Bedingungen berücksichtigen.

Gemäß einer weiteren Ausgestaltung der Vorrichtung sind Mittel zur Bestimmung des Anteils an Oberschwingungen direkt durch eine Messung oder indirekt durch Betriebsparameter des Wechselrichters vorgesehen. Wie bereits ausgeführt, können durch eine Messung die Oberschwingungsanteile im Ausgang des Wechselrichters sehr genau bestimmt werden. Die Bestimmung des Oberschwingungsanteils anhand von Betriebsparametern, wie beispielsweise dem Aussteuerungsgrad des Wechselrichters, ist dagegen eine einfache Möglichkeit die Oberschwingungsanteile zu steuern.

Gemäß einer weiteren Ausgestaltung der Vorrichtung sind Mittel zur Bestimmung der Stellgröße unter Verwendung eines Modells vorgesehen, welches zusätzlich einen oder eine Gruppe der folgenden Parameter umfasst:
- Strom,
- Spannung,
- Verlustleistung des Wechselrichters,
- Kühlwassertemperatur,
- IGBT-Temperatur,
- Geräuschemission des Wechselrichters,
- Filterströme,
- Sollwertvorgaben des Wechselrichters,
- Netzparameter,
- Drehzahl oder Schlupf des Generators.

Wie bereits zuvor ausgeführt, kann die Stellgröße zur Einstellung der Betriebsdauern der verschiedenen Schaltfrequenzen zueinander an den Betriebszustand des Wechselrichters selbst sowie an Vorgaben der Netzbetreiber zur Einspeisung der elektrischen Energie auf einfache Weise angepasst werden. Ein sehr einfaches Modell kann beispielsweise in einer linearen Abhängigkeit der Stellgröße von einem der Parameter bestehen. Denkbar sind aber auch Terme 2. und höherer Ordnung sowie gemischte Terme der Parameter zur Berechnung der Stellgröße. Eine andere Möglichkeit besteht darin, diskrete Größen vorzusehen, welche bei bestimmten Parameterbedingungen verwendet werden.

Vorzugsweise sind gemäß einer weiteren Ausführungsform der erfindungsgemäßen Vorrichtung Mittel zur Hinterlegung einer Kennlinie oder eines Kennfeldes mehrerer Parameter und/oder Mittel zur Berechnung der Stellgröße anhand mindestens eines Parameters vorgesehen. Die Hinterlegung von Kennlinien oder Kennfeldern ist eine relativ einfache Möglichkeit, die Abhängigkeit des Verhältnisses der Betriebsdauern zueinander vom Betriebszustand des Wechselrichters oder den Netzvorgaben fest vorzugeben. Als Mittel dienen Datenspeicher, in welchen die zugeordneten Wertepaare oder Werte-Tupel bei der Abbildung mehrdimensionaler Zusammenhänge, abgespeichert werden. Beispielsweise kann die Stellgröße anhand einer Kennlinie der Sollwertvorgaben des Wechselrichters bestimmt werden. Über die Mittel zur Berechnung der Stellgröße anhand mindestens eines Parameters kann die Stellgröße jederzeit neu bestimmt werden. Dies ist besonders vorteilhaft um unterschiedliche Anforderungen berücksichtigen zu können.

Gemäß einer weiteren Ausführungsform der erfindungsgemäßen Vorrichtung sind Mittel zur Messung mindestens eines Parameters vorgesehen. Über die Mittel zur Messung kann beispielsweise der Betriebszustand des Wechselrichters in Bezug auf den gemessenen Parameter exakt bestimmt werden und entsprechend die Stellgröße anhand der Messung neu bestimmt werden.

Schließlich wird die oben aufgezeigte Aufgabe auch durch eine Stromerzeugungseinrichtung gelöst, umfassend mindestens einen Wechselrichter und mindestens eine erfindungsgemäße Vorrichtung zur Steuerung der Stromerzeugungseinrichtung sowie Mitteln zur Einspeisung des erzeugten Stromes in ein Netz. Wie bereits zuvor ausgeführt, können derartige Stromerzeugungseinrichtungen unter Berücksichtigung verschiedenster Betriebszustände des Wechselrichters eine maximale Leistungsabgabe an das Netz mit den jeweils zulässigen Oberschwingungen einspeisen, so dass ein optimierter Betrieb der Stromerzeugungseinrichtung an dem jeweiligen Einspeisepunkt erreicht wird.

Um die Netzrückwirkungen der verschiedenen Schaltfrequenzen zu minimieren, ist erfindungsgemäß vorgesehen, dass gemäß einer weiteren Ausgestaltung der Stromerzeugungseinrichtung netzseitig mindestens ein Netzfilter vorgesehen ist, welcher auf die mindestens eine erste und die mindestens eine weitere Schaltfrequenz abgestimmt ist. Im Unterschied zu den üblicherweise verwendeten Netzfiltern ist der vorliegende Netzfilter an zwei Schaltfrequenzen angepasst, so dass eine optimale Dämpfung der verwendeten Schaltfrequenzen erreicht wird.

Bevorzugt ist die erfindungsgemäße Stromerzeugungseinrichtung gemäß einer weiteren Ausgestaltung zur Erzeugung von Strom aus regenerativen Energiequellen ausgebildet. Regenerative Energiequellen sind häufig Schwankungen ihrer zur Verfügung stehenden Leistung unterworfen, so dass unterschiedliche Betriebszustände des Wechselrichters berücksichtigt werden müssen, um eine maximale Leistungsabgabe an ein Netz zu ermöglichen. Hierzu gehört auch, dass die eingespeisten Ströme mit möglichst wenigen Oberschwingungen behaftet sind und darüber hinaus alle anderen Betriebsparameter des Wechselrichters, beispielsweise die Verlustleistung des Wechselrichters aber auch Kühlwassertemperatur etc. eingehalten bzw. berücksichtigt werden. Daher tritt die Verwendung der erfindungsgemäßen Vorrichtung zur Steuerung eines Wechselrichters im Hinblick auf ihre Vorteile zur Einspeisung elektrischer Leistung in ein Netz besonders hervor.

Gemäß einer weiteren Ausgestaltung der Stromerzeugungseinrichtung ist diese als Windenergieanlage ausgebildet. Windenergieanlagen können unterschiedliche Topographien aufweisen. Beispielsweise wird bei Windenergieanlagen mit dem sogenannten "Vollumrichter"-Prinzip die gesamte elektrische Leistung über den netzseitigen Wechselrichter in das Netz eingespeist. Daneben gibt es Windenergieanlagen, die mit einer doppeltgespeisten Asynchronmaschine (DFIG) betrieben werden, deren Rotor über einen Wechselrichter mit dem Netz verbunden ist. Der Stator der doppeltgespeisten Asynchronmaschine ist dagegen direkt mit dem Netz verbunden. Beide Topologien können von der vorteilhaften Ausführung der Vorrichtung zur Steuerung des Wechselrichters Gebrauch machen, und zwar sowohl rotorseitig als auch netzseitig sowie für je einen der Wechselrichter als auch für beide zusammen.

Im Weiteren soll die Erfindung anhand von Ausführungsbeispielen in Verbindung mit der Zeichnung näher erläutert werden. Die Zeichnung zeigt in
- Fig. 1: in einem Diagramm beispielhaft die Grenzkurven für Oberschwingungen und von mit fester Schaltfrequenz betriebenen Wechselrichtern erzeugte Oberschwingungen im Bereich von 2 - 9 kHz,
- Fig. 2: beispielhaft die Grenzkurven und von einem nach dem erfindungsgemäßen Verfahren betriebenen Wechselrichter erzeugte Oberschwingungen im Bereich von 2 - 9 kHz,
- Fig. 3a) und b): in einem Diagramm die Verhältnisse der Betriebsdauern verschiedener Schaltfrequenzen eines Ausführungsbeispiels eines Wechselrichters,
- Fig. 4: in einem Diagramm eine mögliche zeitliche Abfolge der Betriebszuständen mit verschiedenen Schaltfrequenzen eines Ausführungsbeispiels eines Wechselrichters,
- Fig. 5: eine schematische Schaltskizze einer Windenergieanlage mit einer doppeltgespeisten Asynchronmaschine gemäß einem Ausführungsbeispiel,
- Fig. 6: ein Ausführungsbeispiel eines zu verwendenden Netzfilters in einer schematischen Schaltskizze,
- Fig. 7: eine schematische Schaltskizze eines Ausführungsbeispiels einer Windenergieanlage nach dem sogenannten Vollumrichter-Prinzip,
- Fig. 8: eine beispielhafte Darstellung der Oberschwingungspegel für eine Schaltfrequenz von 2250 Hz,
- Fig. 9: eine beispielhafte Darstellung der Oberschwingungspegel für eine Schaltfrequenz von 4500 Hz.

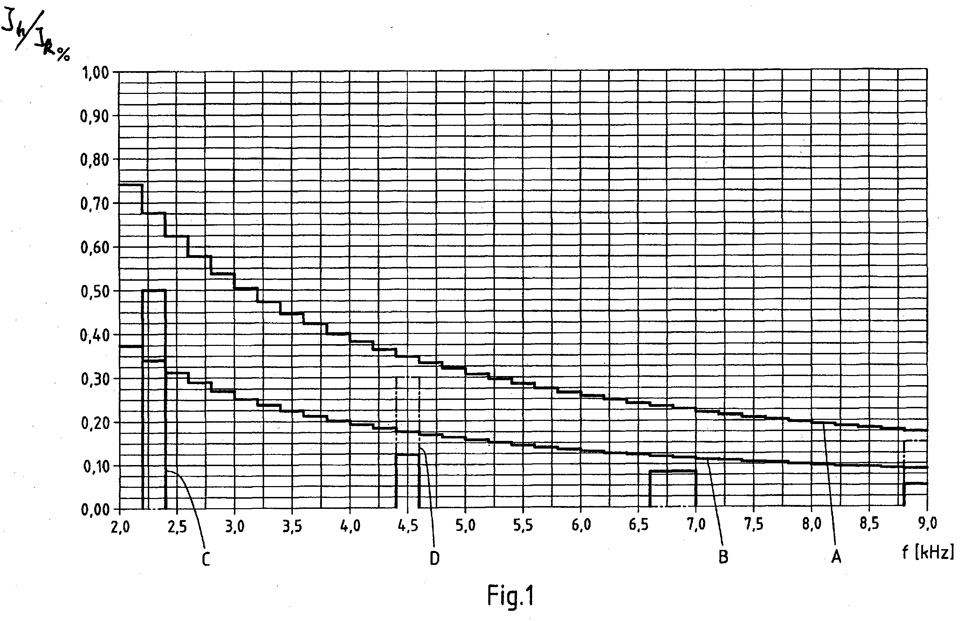

In Fig. 1 ist zunächst in einem Diagramm auf der Abszisse die Frequenz aufgetragen und zwar von 2 kHz - 9 kHz. Als Ordinate ist in Prozent der Anteil des Stroms Iₕ/I_{R} in dem Frequenzband aufgetragen, wobei Iₕ der Strom in dem jeweiligen Frequenzband und I_{R} der Nennstrom der Anlage ist. Die Kurve A, welche in 200 Hz Bändern gerastert aufgetragen ist, zeigt beispielhaft eine von einem Netzbetreiber vorgegebene Grenzkurve für einen Netzanschluß mit einem Kurzschlußleistungsverhältnis Sk/Snenn = 100. Hierbei ist Sk die Netzkurzschlußleistung des Netzknotens, an welchen die Anlage angeschlossen wird und Snenn die Nennleistung der Erzeugeranlage. Alle dargestellten Kurven stellen 10 Minuten Mittelwerte dar. Kurve B beschreibt eine Grenzkurve für ein Kurzschlußleistungsverhältnis Sk/Snenn = 50. Kurve B stellt also im Vergleich zu Kurve A einen schwächeren Netzanschluß dar. Die Kurven C und D zeigen modellhaft aus dem Stand der Technik bekannte, von einer typischen Erzeugeranlage mit einem doppeltgespeisten Asynchrongenerator mit rotorseitigem und netzseitigem Wechselrichter ins Netz eingespeiste Oberschwingungen. Hierbei zeigt Kurve C das erzeugte Spektrum für den Betrieb der Wechselrichter mit einer Schaltfrequenz von 2,25 kHz. Man erkennt die Maxima im Bereich der Schaltfrequenz, sowie deren ganzzahligen Vielfachen bei etwa 2,25 kHz, 4,5 kHz, 6,75 kHz und 9 kHz. Kurve D zeigt den Betrieb der Wechselrichter mit einer Schaltfrequenz von 4,5 kHz. Es ist deutlich zu erkennen, dass auch hier nur Oberschwingungen im Bereich der Vielfachen der Schaltfrequenz entstehen, nämlich bei 4,5 kHz und 9 kHz. Zudem erkennt man, dass beide Kurven die Grenzkurve B überschreiten, so dass ein Betrieb an einem schwachen Netzanschlußknoten gemäß Kurve B also nicht erlaubt ist.

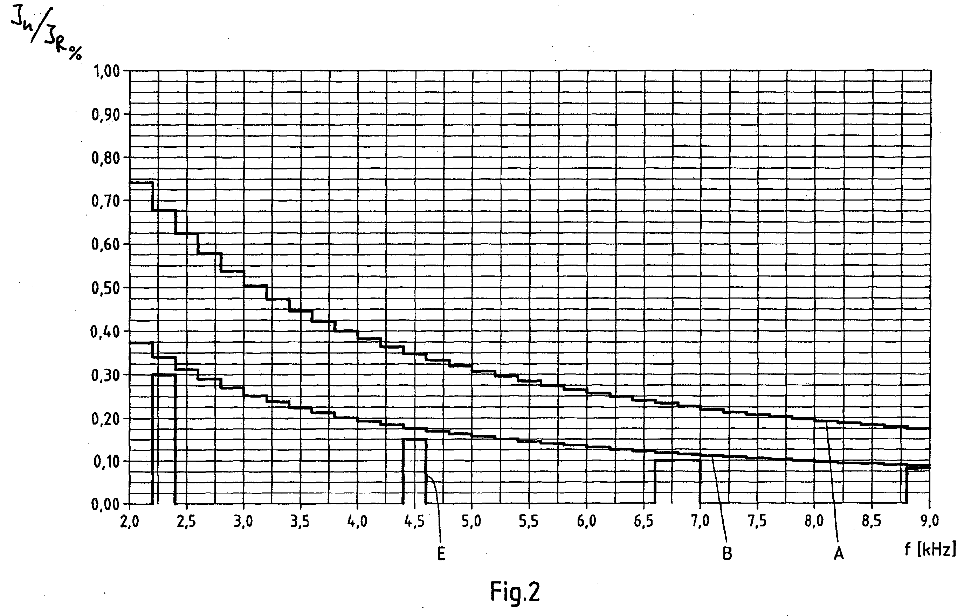

In Figur 2 sind die schon bekannten Grenzkurven A und B erneut dargestellt, sowie die Kurve E, welche gemäß einem ersten Ausführungsbeispiel einen kombinierten Betrieb der Wechselrichter mit Schaltfrequenzen von 2,25 kHz und 4,5 kHz nach dem erfindungsgemäßen Verfahren beschreibt. Die Wechselrichter werden also für eine bestimmte erste Zeit mit der Schaltfrequenz 2,25 kHz sowie für eine bestimmte zweite Zeit mit der Schaltfrequenz 4,5 kHz betrieben. Da es sich um 10 Minuten Mittelwerte handelt, ist es möglich, die Mittelwerte der Oberschwingungspegel in einzelnen Frequenzbändern im Vergleich zu den Kurven C und D aus Fig. 1 zu reduzieren. Die Pegel liegen nun unterhalb der Grenzkurve B, der Betrieb an diesem schwachen Netzknoten ist somit möglich. Die in den Figuren 1 und 2 dargestellten Pegel sind lediglich beispielhaft und von der jeweiligen Netztopologie, den verwendeten Filtern sowie der eingespeisten Leistung abhängig. Durch das erfindungsgemäße Verfahren ist es möglich, die vorgegebenen Grenzkurven bestmöglich auszunutzen, d.h. die unvermeidbaren Oberschwingungen in den Bereichen zu erzeugen, in denen der jeweilige Grenzwert noch nicht erreicht ist und somit eine bessere Ausnutzung der Vorgaben des Netzbetreibers zu ermöglichen.

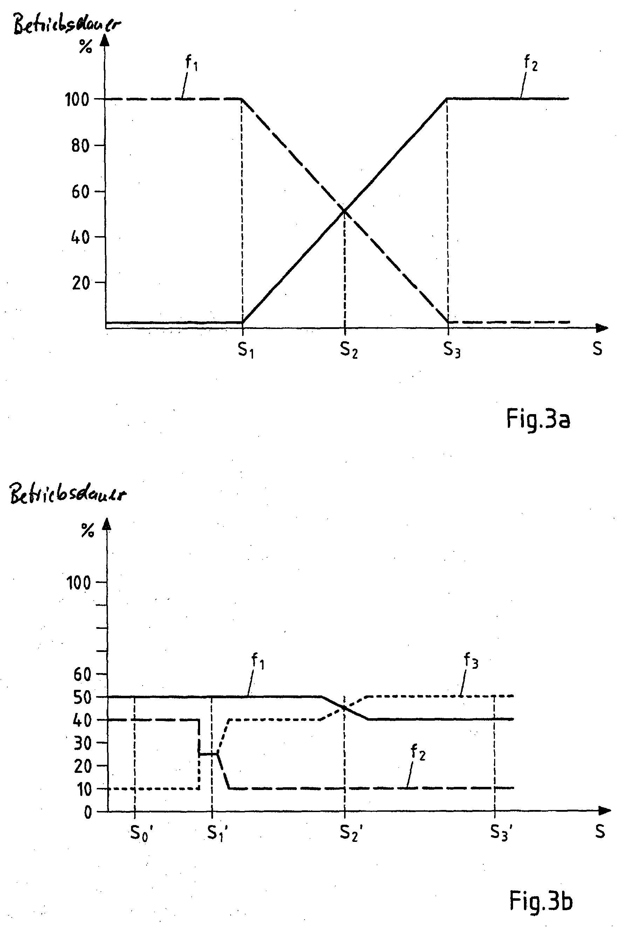

Eine ähnliche Lösung wird durch das in Fig. 3a) gezeigte Ausführungsbeispiel eines Verfahrens zum Betreiben eines Wechselrichters erreicht, bei welchem der Wechselrichter abhängig von einer Stellgröße S mit zwei verschiedenen Frequenzen f₁ und f₂ betrieben wird. Auf der Abszisse ist in dem Diagramm der Fig. 3a) die Stellgröße S aufgetragen und auf der Ordinate die Verhältnisse der Betriebsdauern zueinander. Die Stellgröße S kann beliebig gewählt werden, vorzugsweise wird sie jedoch so gewählt, dass beispielsweise die Grenzen für die Anteile für die Oberschwingungen, wie sie beispielsweise Fig. 1 dargestellt sind, eingehalten werden.

Fig. 3a) zeigt, dass abhängig von der Stellgröße S der Wechselrichter zunächst alleine mit einer Frequenz f₁ zu 100 % betrieben wird. Überschreitet die Stellgröße S den Wert S₁, wird das Verhältnis der Betriebsdauern der Schaltfrequenzen f₁ und f₂ zueinander verändert, so dass beispielsweise im Punkt S₂ der Wechselrichter jeweils zu 50 % mit der Frequenz f₁ und zu 50 % mit der Frequenz f₂ betrieben wird. Verändert sich die Stellgröße S weiter in Richtung S₃, erhöht sich der Anteil der Betriebsdauern mit der Frequenz f₂ weiter, so dass beispielsweise im Punkt S₃ der Wechselrichter lediglich mit der Schaltfrequenz f₂ betrieben wird. Denkbar ist aber auch, dass beispielsweise, wie in Fig. 3b) dargestellt, drei verschiedene Frequenzen, f₁, f₂ und f₃ als Schaltfrequenzen für den Wechselrichter benutzt werden und diese Schaltfrequenzen abhängig von einer Stellgröße S in ihrem Verhältnis zur Gesamtbetriebsdauer eingestellt werden. So ändert sich beispielsweise die Betriebsdauer des Wechselrichters mit der Frequenz f₁ von 50 % im Punkt S₁' auf 40 % im Punkt S₂'. Wohingegen die Betriebsdauer mit der Frequenz f₃ von 10 % bei S₀' auf 50 % bei S₂' anwächst. Darüber hinaus ist dargestellt, dass die Betriebsdauer der Frequenz f₂' von 40 % bei S₀' auf 10 % bei S₂' fällt. Die Änderung der Betriebsdauern der Frequenzen muss dabei nicht notwendigerweise kontinuierlich erfolgen, sondern kann auch in diskreten Sprüngen geregelt werden. Fig. 3b) zeigt hierzu lediglich ein Beispiel, wie die Betriebsdauern abhängig von einer Stellgröße S eingestellt werden können. In den Figuren 3a) und 3b) sind lineare Kurvenverläufe dargestellt, es sind aber auch alle anderen Kurvenverläufe, beispielsweise exponentielle oder quadratische Kurvenverläufe, denkbar.

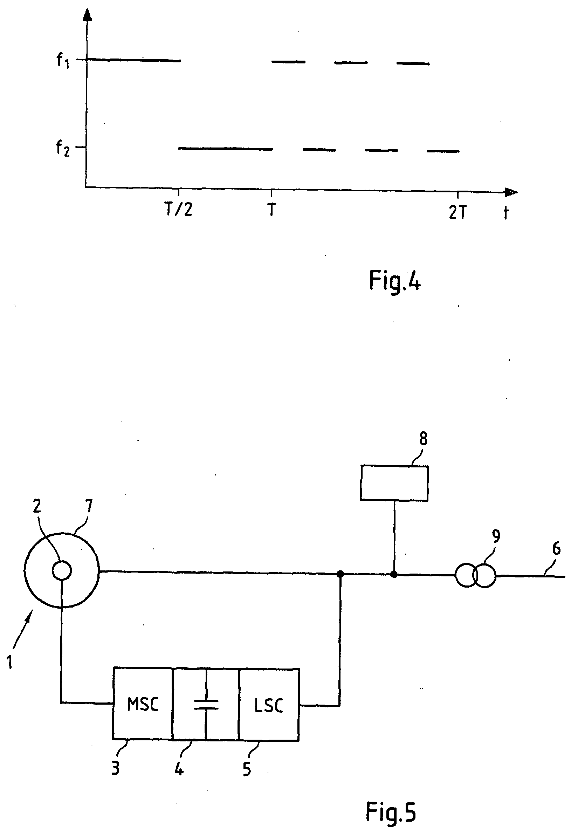

Wie die Betriebsdauer des Wechselrichters mit einer ersten Schaltfrequenz zur Betriebsdauer des Wechselrichters mit einer weiteren Schaltfrequenz im zeitlichen Ablauf eingestellt wird, ist prinzipiell beliebig. Fig. 4 zeigt zwei Möglichkeiten, wie ein spezifisches Verhältnis der Betriebsdauern zueinander eingestellt werden kann. Hierzu ist auf der Abszisse die Zeit aufgetragen, wobei mit T eine Periode dargestellt ist, für welche das Verhältnis der Betriebsdauern mit den jeweiligen Schaltfrequenzen bestimmt wird. Beispielsweise kann ein Verhältnis von 50 % Betriebsdauer des Wechselrichters mit der Schaltfrequenz f₁ und 50 % Betriebsdauer des Wechselrichters mit der Frequenz f₂ so eingestellt werden, dass zunächst über die halbe Periode T/₂ die Frequenz f₁ eingestellt wird und anschließend für eine Zeit T/₂ die Frequenz f₂. Daneben gibt es aber auch die Möglichkeit, schnell zwischen den beiden Schaltfrequenzen hin und her zu schalten, wie ebenfalls in Fig. 3 angedeutet ist. In dem Zeitintervall von T - 2T wird beispielsweise häufiger zwischen beiden Schaltfrequenzen hin und her geschaltet, wobei dennoch ein Verhältnis der Betriebsdauern mit der Schaltfrequenz f₁ und f₂ von jeweils 50 % erreicht wird. Es können auch beliebig andere Einschaltmuster verwendet werden, um die gewünschten Verhältnisse der Betriebsdauern für verschiedene Schaltfrequenzen einzustellen. Hier können erneut Parameter, wie beispielsweise IGBT-Temperaturen oder ähnliches Einfluss finden. Die Stellgröße S, wie sie in den Fig. 3a) und b) auf der Abszisse aufgetragen ist und das Verhältnis der Betriebsdauern mit den Schaltfrequenzen f1 und f2 beschreibt, kann über folgende Parameter unter Verwendung eines Modells bestimmt werden:
- Oberschwingungen,
- Strom,
- Spannung,
- Verlustleistung des Wechselrichters,
- Kühlwassertemperatur,
- IGBT-Temperatur,
- Geräuschemission des Wechselrichters,
- Filterströme,
- Sollwertvorgaben des Wechselrichters,
- Netzparameter,
- Drehzahl oder Schlupf des Generators.

Wie bereits zuvor ausgeführt, können die Parameter in beliebiger Ordnung in ein Modell eingehen. Das Modell kann Algorithmen aber auch Kennlinien aufweisen, um die Stellgröße zu ermitteln. Auch Kombinationen von Parametern, beispielsweise zur Berücksichtigung deren Wechselwirkung miteinander, können verwendet werden.

Vorzugsweise sind dabei die Schaltfrequenzen f₁, f₂ aber auch f₃ ganzzahlige Vielfache voneinander, so dass ein relativ einfaches Hardwarefilterkonzept genutzt werden kann.

Die Stellgröße S kann abhängig von mindestens einem Parameter als Kennlinie vorgegeben sein, so dass beispielsweise eine konkrete Messung des Parameters nicht erfolgen muss, sofern dieser der Steuerung direkt zugeführt wird. Ein Beispiel für eine entsprechende Kennlinienführung wäre eine Veränderung der Stellgröße S abhängig von einem Sollwert der Leistungsabgabe bzw. der Stromabgabe des Wechselrichters. Andere Sollwertvorgaben, welche zur Kennlinienführung verwendet werden können, sind ebenfalls denkbar.

Daneben kann die Stellgröße S in Abhängigkeit mindestens eines Parameters mit Hilfe eines Algorithmus berechnet werden. Werden beispielsweise der Sollwert der Leistungsabgabe oder der Stromabgabe des Wechselrichters als Parameter genutzt, kann auch hier auf eine Messung verzichtet werden, da diese Parameter in der Regel direkt an die Steuerung übergeben werden.

Darüber hinaus besteht die Möglichkeit die Stellgröße S aus den oben genannten Parametern durch eine Messung unter Verwendung eines Modells neu zu bestimmen und damit die Verhältnisse der Betriebsdauern für verschiedene Schaltfrequenzen des Wechselrichters einzustellen.

Fig. 5 zeigt nun eine typische Topologie einer Windenergieanlage mit einer doppeltgespeisten Asynchronmaschine als Generator 1, dessen Rotor 2 über einen maschinenseitigen Wechselrichter 3, einen Zwischenspannungskreis 4 einen netzseitigen Wechselrichter 5 sowie einen Transformator 9 an das Netz 6 angebunden ist. Darüber hinaus ist der Stator 7 des Generators 1 über den Transformator 9 an das Netz 6 angeschlossen und ein Netzfilter 8 vorgesehen, welcher spezifisch auf die Schaltfrequenzen der Wechselrichter 3, 5 abgestimmt ist.

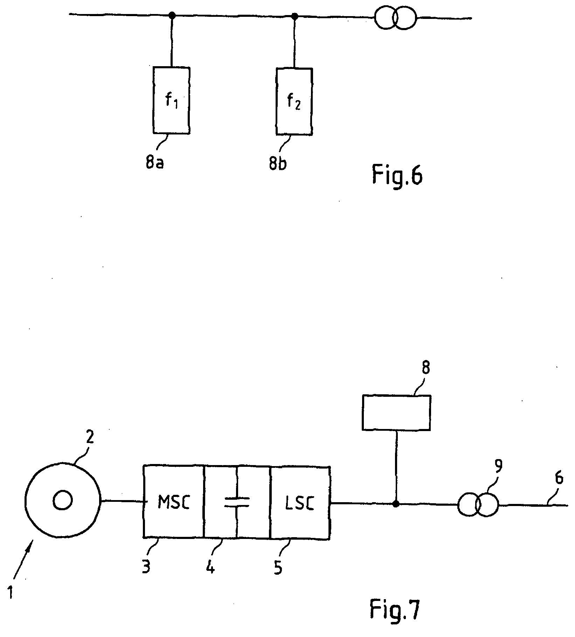

Beispielsweise können sowohl der maschinenseitige Wechselrichter 3 aber auch der netzseitige Wechselrichter 5 mit einer Schaltfrequenz von f₁ von beispielsweise 2,25 kHz und mit einer Schaltfrequenz f₂ von 4,5 kHz betrieben werden. Erfindungsgemäß wird die Betriebsdauer der Wechselrichter mit der Schaltfrequenz f₁ und mit der Schaltfrequenz f₂ in ihrem Verhältnis zueinander so gewählt, dass beispielsweise der Mittelwert der Ströme einer oder mehrerer Oberschwingungen innerhalb des vom Netzbetreiber vorgegebenen Limits verbleibt. Das Netzfilter 8 kann beispielsweise hierzu in zwei Filter aufgeteilt werden, wie in Fig. 6 dargestellt ist. Das Filter 8 weist ein Filter 8a und ein Filter 8b auf. Filter 8a ist beispielsweise auf die Schaltfrequenz f₁ abgestimmt und erzielt hier die maximale Dämpfung. Das Filter 8b kann dann auf die Schaltfrequenz f2 abgestimmt werden, um auch dort eine hohe Dämpfung zu erzielen. Sofern f₁ und f₂ ganzzahlige Vielfache voneinander sind können über eine entsprechend einfache Filterkonfiguration auch die harmonischen Oberschwingungen der Schaltfrequenzen f₁ durch den auf f2 abgestimmten Filter gedämpft werden. Beispielsweise treten im Bereich von 2*f1 harmonische Oberschwingungen auf, welche durch den auf f2 abgestimmten Filter reduziert werden können.

Ein entsprechendes Filter ist beispielsweise auch in einer anderen Topologie einer Windenergieanlage, wie sie in Fig. 7 schematisch dargestellt ist, verwendbar. Die in Fig. 7 dargestellte Windenergieanlage weist einen Generator 1 auf, dessen Stator 2 über einen maschinenseitigen Wechselrichter 3, einen Zwischenkreis 4, einen netzseitigen Wechselrichter 5 und einen Transformator 9 mit dem Netz 6 verbunden ist. Das Netzfilter 8 ist auch hier vorzugsweise auf die verwendeten Schaltfrequenzen im netzseitigen Wechselrichter abgestimmt. Der Rotor kann beispielsweise permanent erregt sein.

Als Filter 8 kann beispielsweise ein aktives oder ein passives Filter vorgesehen sein. Ein aktives Filter beinhaltet aktive Komponenten wie beispielsweise IGBTs, wodurch die Filtercharakteristik angepasst werden kann. Passive Filter sind beispielsweise sogenannte Saugkreise. Die Resonanzfrequenz dieser schmalbandigen Filter wird auf die Schaltfrequenz des Wechselrichters abgestimmt. Eine andere Möglichkeit ist der Einsatz von breitbandigen Filtern, welche einen weiten Frequenzbereich bedämpfen, jedoch viel Bauraum in Anspruch nehmen. Aufgrund der Wahl von Schaltfrequenzen, welche ganzzahlige Vielfache voneinander sind, kann ein besonders einfach gestaltetes, die verwendeten Schaltfrequenzen gut dämpfendes Filter verwendet werden. Durch die einfache Wahl der Betriebsdauern der Ansteuerung des Wechselrichters kann die Leistungsabgabe von Stromerzeugungseinrichtungen an unterschiedliche Parameter und insbesondere an Grenzwerte, z.B. Oberschwingungsgrenzwerte des Netzbetreibers, auf einfache Weise angepasst werden.

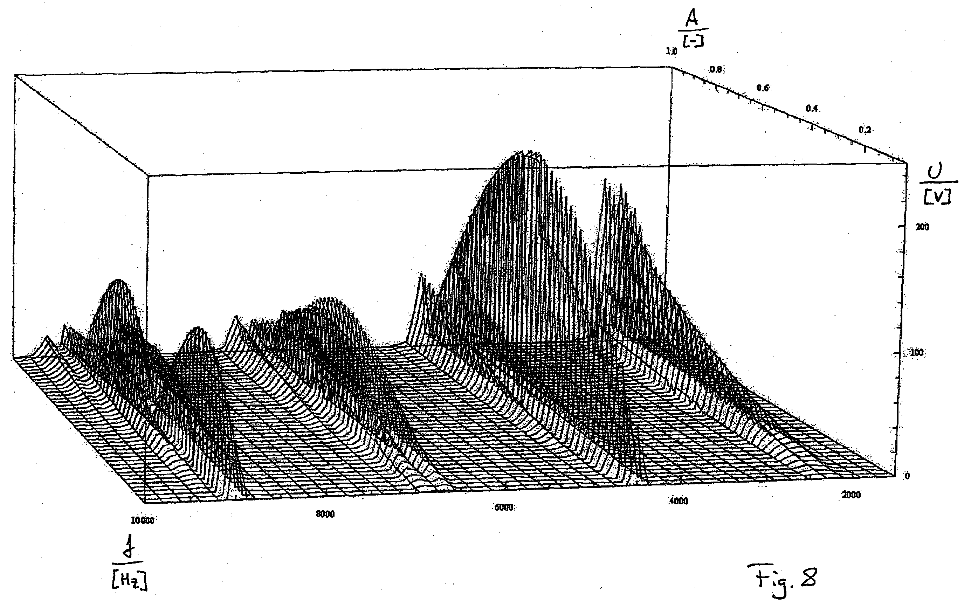

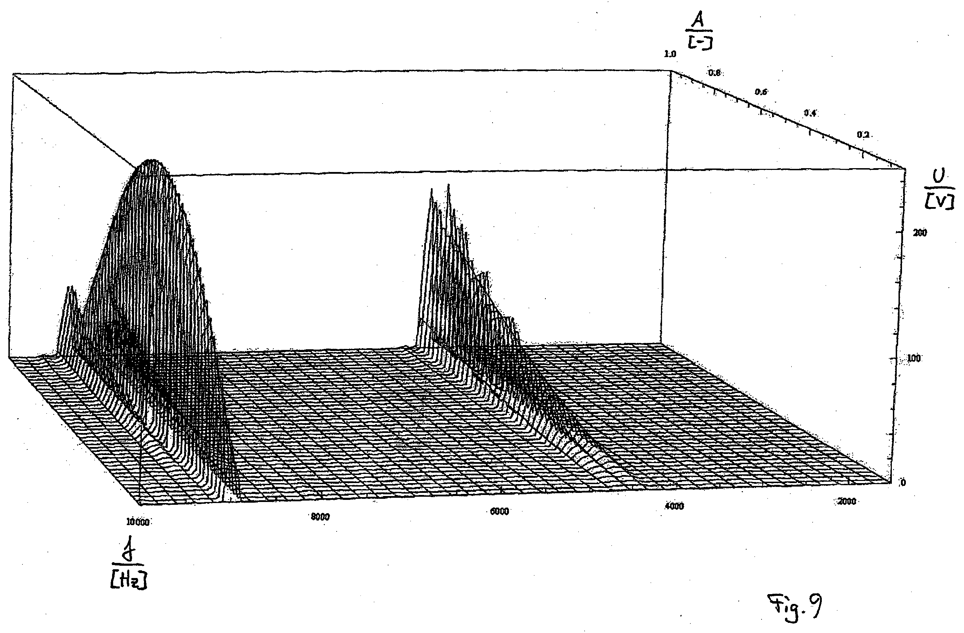

In den Figuren 8 und 9 sind beispielhaft die Kennlinien eines Wechselrichters dargestellt, welche den Zusammenhang zwischen dem Aussteuerungsgrad A, den erzeugten Oberschwingungsspannungspegeln U und der Schaltfrequenz f zeigen. Der Aussteuerungsgrad A beschreibt das Verhältnis zwischen der Amplitude der Ausgangsspannung des Wechselrichters und der Zwischenkreisspannung. Die Zwischenkreisspannung beträgt hier beispielhaft 1100 V. Auf der x-Achse ist die Frequenz f, auf der y-Achse ist die Spannung U der erzeugten Oberschwingungen aufgetragen. Auf der z-Achse ist die Aussteuerung A im Bereich von null bis eins angegeben.

Figur 8 zeigt das Oberschwingungsspektrum bei einer Schaltfrequenz von 2250 Hz. Gut zu erkennen ist eine lineare Abhängigkeit der Spannungspegel von der Aussteuerung für die Seitenbänder der einfachen Schaltfrequenz, also im Bereich von 2250 Hz. Der Pegel der doppelten Schaltfrequenz, 4500Hz, weist einen parabelförmigen Verlauf mit einem Maximum bei der halben Aussteuerung auf. Die Oberschwingungen für die dreifache und vierfache Schaltfrequenz sind ebenso dargestellt.

Figur 9 zeigt die Oberschwingungspegel für die doppelte Schaltfrequenz von 4500Hz. Unterhalb dieser Schaltfrequenz werden keine Pegel erzeugt, oberhalb nur wiederum bei ganzzahligen Vielfachen. Es ist leicht vorstellbar, dass durch die Wahl der Betriebsdauer mit den jeweiligen Schaltfrequenzen von 2250 Hz bzw. 4500 Hz, gemittelt eine Addition der beiden Kurven mit einer dem Betriebsdauerverhälntis entsprechenden Wichtung der Kurven erhalten wird. Durch die Wahl der Betriebsdauern der Schaltfrequenzen des Wechselrichters kann darauf Einfluss genommen werden, in welchen Frequenzbändern anteilig Oberschwingungen erzeugt werden, so dass Netzvorgaben, welche für verschiedene Frequenzen unterschiedlich hohe Oberschwingungspegel zulassen, besser ausgenutzt werden können.

## Patentansprüche

1. Verfahren zum Betreiben einer Stromerzeugungseinrichtung mit einem Wechselrichter zur Einspeisung von elektrischer Leistung in ein Netz,
**dadurch gekennzeichnet, dass**
der Wechselrichter mindestens mit zwei verschiedenen Schaltfrequenzen betreibbar ist, wobei das Verhältnis der Betriebsdauer des Wechselrichters mit einer ersten Schaltfrequenz zur Betriebsdauer des Wechselrichters mit mindestens einer weiteren Schaltfrequenzen von mindestens einer Stellgröße abhängig gewählt wird und als eine Stellgröße der Anteil an auftretenden Oberschwingungen gewählt wird.

2. Verfahren nach Anspruch 1,
**dadurch gekennzeichnet, dass**
die Stellgröße unter Verwendung eines Modells bestimmt wird.

3. Verfahren nach Anspruch 1 oder 2,
**dadurch gekennzeichnet, dass**
die Bestimmung des Anteils an Oberschwingungen direkt durch eine Messung oder indirekt durch Betriebsparameter des Wechselrichters erfolgt.

4. Verfahren nach Anspruch 3,
**dadurch gekennzeichnet, dass**
als Betriebsparameter für den Anteil der Oberschwingungen der Aussteuerungsgrad des Wechselrichters verwendet wird und die Abhängigkeit des Anteils an Oberschwingungen vom Aussteuerungsgrad zur Laufzeit berechnet oder über eine vordefinierte Kennlinie bestimmt wird.

5. Verfahren nach einem der Ansprüche 1 bis 4,
**dadurch gekennzeichnet, dass**
eine Stellgröße unter Verwendung eines Modells bestimmt wird, welches zusätzlich abhängig von einem oder einer Gruppe der folgenden Parameter::
- Strom,
- Spannung,
- Verlustleistung des Wechselrichters,
- Kühlwassertemperatur,
- IGBT-Temperatur,
- Geräuschemission des Wechselrichters,
- Filterströme,
- Sollwertvorgaben des Wechselrichters
- Netzparameter,
- Drehzahl oder Schlupf des Generators
ist.

6. Verfahren nach einem der Ansprüche 3 bis 5,
**dadurch gekennzeichnet, dass** der mindestens eine Parameter durch eine Messung erfasst wird.

7. Verfahren nach einem der Ansprüche 1 bis 6
**dadurch gekennzeichnet, dass**
die erste und die weiteren Schaltfrequenzen ganzzahlige Vielfache voneinander sind.

8. Verfahren nach einem der Ansprüche 1 bis 7,
**dadurch gekennzeichnet, dass**
ein rotorseitiger und/oder ein netzseitiger Wechselrichter betrieben wird.

9. Computerprogrammprodukt, mit welchem eine Stromerzeugungseinrichtung mit einem Wechselrichter gemäß einem Verfahren nach Anspruch 1 bis 8 betreibbar ist.

10. Vorrichtung zur Steuerung des Betriebs einer Stromerzeugungseinrichtung mit mindestens einem Wechselrichter zur Einspeisung von elektrischer Leistung in ein Netz gemäß einem Verfahren nach Anspruch 1 bis 8
**dadurch gekennzeichnet, dass**
die Vorrichtung Mittel zur Ansteuerung des Wechselrichters (3,5) mit einer ersten und mindestens einer weiteren Schaltfrequenz (f₁, f₂) und Mittel zur Einstellung und Änderung des Verhältnisses der Betriebsdauer mit einer ersten Schaltfrequenz zur Betriebsdauer mit mindestens einer weiteren Schaltfrequenz abhängig von einer Stellgröße (S) aufweist, wobei durch die Mittel zumindest der Anteil der auftretenden Oberschwingungen als Stellgröße (S) verwendbar ist.

11. Vorrichtung nach Anspruch 10,
**dadurch gekennzeichnet, dass**
Mittel zur Bestimmung der Stellgröße unter Verwendung eines Modells vorgesehen sind.

12. Vorrichtung nach Anspruch 10 oder 11,
**dadurch gekennzeichnet, dass**
Mittel zur Bestimmung des Anteils an Oberschwingungen direkt durch eine Messung oder indirekt durch Betriebsparameter des Wechselrichters vorgesehen sind.

13. Vorrichtung nach Anspruch 11 oder 12,
**dadurch gekennzeichnet, dass**
Mittel zur Bestimmung der Stellgröße unter Verwendung eines Modells, welches zusätzlich einen oder eine Gruppe der folgenden Parameter umfasst:
- Strom,
- Spannung,
- Verlustleistung des Wechselrichters,
- Kühlwassertemperatur,
- IGBT-Temperatur,
- Geräuschemission des Wechselrichters,
- Filterströme
- Sollwertvorgaben des Wechselrichters,
- Netzparameter,
- Drehzahl oder Schlupf des Generators
vorgesehen sind.

14. Vorrichtung nach einem der Ansprüche 10 bis 13,
**dadurch gekennzeichnet, dass**
Mittel zur Hinterlegung einer Kennlinie eines Parameters oder eines Kennfeldes mehrerer Parameter und/oder Mittel zur Berechnung der Stellgröße anhand mindestens eines Parameters vorgesehen sind.

15. Vorrichtung nach einem der Ansprüche 10 bis 14,
**dadurch gekennzeichnet, dass** Mittel zur Messung mindestens eines Parameters vorgesehen sind.

16. Stromerzeugungseinrichtung umfassend mindestens einen Wechselrichter (3, 5) und mindestens eine Vorrichtung nach einem der Ansprüche 11 bis 15 sowie Mitteln zur Einspeisung des erzeugten Stromes in ein Netz.

17. Stromerzeugungseinrichtung nach Anspruch 16,
**dadurch gekennzeichnet, dass**
netzseitig mindestens ein Netzfilter (8) vorgesehen ist, welcher auf die mindestens eine erste und die mindestens eine weitere Schaltfrequenz abgestimmt ist.

18. Stromerzeugungseinrichtung nach Anspruch 16 oder 17,
**dadurch gekennzeichnet, dass**
die Stromerzeugungseinrichtung zur Erzeugung von Strom aus regenerativen Energiequellen ausgebildet ist.

19. Stromerzeugungseinrichtung nach einem der Ansprüche 15 bis 18,
**dadurch gekennzeichnet, dass**
die Stromerzeugungseinrichtung als Windenergieanlage ausgebildet ist.

## Claims

1. A method for operating a power generation device with an inverter for feeding electrical power into a grid,
**characterized in that**
the inverter can be operated with at least two different switching frequencies, wherein the ratio of the operating duration of the inverter with a first switching frequency to the operating duration of the inverter with at least one further switching frequency is selected in dependence on at least one manipulated variable, and wherein the proportion of occurring harmonics is selected as a manipulated variable.

2. The method according to claim 1, **characterized in that** the manipulated variable is determined by utilizing a model.

3. The method according to claim 1 or 2, **characterized in that** the proportion of harmonics is determined directly by means of a measurement or indirectly based on operating parameters of the inverter.

4. The method according to claim 3, **characterized in that** the level control coefficient of the inverter is used as operating parameter for the proportion of harmonics and the dependence of the proportion of harmonics on the level control coefficient is calculated as a function of the running time or determined by means of a predefined characteristic.

5. The method according to one of claims 1 to 4, **characterized in that** a manipulated variable is determined by utilizing a model that is additionally dependent on one or a group of the following parameters:
- current,
- voltage,
- inverter power loss,
- cooling water temperature,
- IGBT temperature,
- inverter noise emission,
- filter currents,
- inverter setpoint settings,
- grid parameters,
- generator speed or slip.

6. The method according to one of claims 3 to 5, **characterized in that** the at least one parameter is determined by means of a measurement.

7. The method according to one of claims 1 to 6, **characterized in that** the first and the further switching frequencies are integral multiples of one another.

8. The method according to one of claims 1 to 7, **characterized in that** an inverter on the rotor side and/or an inverter on the grid side is operated.

9. A computer program product, by means of which a power generation device with an inverter can be operated in accordance with a method of claims 1 to 8.

10. A device for controlling the operation of a power generation device with at least one inverter for feeding electrical power into a grid in accordance with a method of claims 1 to 8,
**characterized in that**
the device features means for driving the inverter (3, 5) with a first and at least one further switching frequency (f₁, f₂), as well as means for adjusting and varying the ratio of the operating duration with a first switching frequency to the operating duration with at least one further switching frequency in dependence on a manipulated variable (S), wherein the means can utilize at least the proportion of occurring harmonics as manipulated variable (S) .

11. The device according to claim 10, **characterized in that** means are provided for determining the manipulated variable by utilizing a model.

12. The device according to claim 10 or 11, **characterized in that** means are provided for determining the proportion of harmonics directly by means of a measurement or indirectly based on operating parameters of the inverter.

13. The device according to claim 11 or 12, **characterized in that** means are provided for determining the manipulated variable by utilizing a model that additionally comprises one or a group of the following parameters:
- current,
- voltage,
- inverter power loss,
- cooling water temperature,
- IGBT temperature,
- inverter noise emission,
- filter currents,
- inverter setpoint settings,
- grid parameters,
- generator speed or slip.

14. The device according to one of claims 10 to 13, **characterized in that** means are provided for storing a characteristic of a parameter or a characteristic diagram of multiple parameters and/or means are provided for calculating the manipulated variable based on at least one parameter.

15. The device according to one of claims 10 to 14, **characterized in that** means are provided for measuring at least one parameter.

16. A power generation device comprising at least one inverter (3, 5) and at least one device according to one of claims 11 to 15, as well as means for feeding the generated power into a grid.

17. The power generation device according to claim 16, **characterized in that** at least one line filter (8) is provided on the grid side and tuned to the at least one first and the at least one further switching frequency.

18. The power generation device according to claim 16 or 17, **characterized in that** the power generation device is designed for generating power from regenerative energy sources.

19. The power generation device according to one of claims 15 to 18, **characterized in that** the power generation device is designed in the form of a wind power plant.

## Revendications

1. Procédé destiné à faire fonctionner un dispositif de production de courant avec un onduleur pour alimenter en puissance électrique un réseau
**caractérisé en ce que**
l'onduleur peut être utilisé au moins avec deux fréquences de commutation différentes, pour lequel le rapport entre la durée de fonctionnement de l'onduleur avec une première fréquence de commutation et la durée de fonctionnement de l'onduleur avec au moins une autre fréquence de commutation est choisi en fonction d'au moins une grandeur de réglage et la part en harmoniques se produisant est choisie en tant que grandeur de réglage.

2. Procédé selon la revendication 1 **caractérisé en ce que** la grandeur de réglage est déterminée en utilisant un modèle.

3. Procédé selon la revendication 1 ou 2 **caractérisé en ce que** la détermination de la part en harmoniques a lieu directement par le biais d'une mesure ou indirectement par le biais des paramètres de fonctionnement de l'onduleur.

4. Procédé selon la revendication 3 **caractérisé en ce que** le degré de modulation de l'onduleur est utilisé comme paramètre de fonctionnement pour la part d'harmoniques et **en ce que** la dépendance de la part d'harmoniques est calculée à partir du degré de modulation par rapport à la durée de marche ou est déterminée par le biais d'une courbe caractéristique préalablement définie.

5. Procédé selon l'une quelconque des revendications 1 à 4 **caractérisé en ce qu'**une grandeur de réglage est déterminée en utilisant un modèle, lequel est fonction d'un paramètre ou d'un groupe de paramètres suivant :
- courant,
- tension,
- perte de puissance de l'onduleur,
- température de l'eau de refroidissement,
- température de transistor bipolaire à porte isolée (IGBT),
- émission de bruits de l'onduleur,
- courants de filtrage,
- consignes de valeur théorique de l'onduleur,
- paramètres de réseau,
- nombre de tours ou glissement du générateur.

6. Procédé selon l'une quelconque des revendications 3 à 5 **caractérisé en ce qu'**au moins un paramètre est saisi par une mesure.

7. Procédé selon l'une quelconque des revendications 1 à 6 **caractérisé en ce que** la première et les autres fréquences de commutation sont des multiples entiers entre elles.

8. Procédé selon l'une quelconque des revendications 1 à 7 **caractérisé en ce qu'**on fait fonctionner un onduleur côté rotor et/ou côté réseau.

9. Produit de programme informatique avec lequel un dispositif de production de courant avec un onduleur peut être utilisé conformément à un procédé selon la revendication 1 à 8.

10. Dispositif destiné à commander le fonctionnement d'un dispositif de production de courant avec au moins un onduleur pour alimenter en puissance électrique un réseau conformément à un procédé selon la revendication 1 à 8
**caractérisé en ce que**
le dispositif comporte des moyens pour piloter l'onduleur (3,5) avec une première et au moins une autre fréquence de commutation (f₁, f₂) et des moyens pour régler et modifier le rapport entre la durée de fonctionnement avec une première fréquence de fonctionnement et la durée de fonctionnement avec au moins une autre fréquence de commutation en fonction d'une grandeur de réglage (S), pour lequel au moins la part des harmoniques se produisant est utilisée par le biais de moyens comme grandeur de réglage (S).

11. Dispositif selon la revendication 10 **caractérisé en ce que** des moyens sont prévus pour déterminer la grandeur de réglage en utilisant un modèle.

12. Dispositif selon la revendication 10 ou 11 **caractérisé en ce que** des moyens sont prévus pour déterminer la part en harmoniques directement par le biais d'une mesure ou indirectement par le biais des paramètres de fonctionnement de l'onduleur.

13. Dispositif selon la revendication 11 ou 12 **caractérisé en ce que** des moyens sont prévus pour déterminer la grandeur de réglage en utilisant un modèle, lequel comprend en plus un paramètre ou un groupe de paramètres suivant :
- courant,
- tension,
- perte de puissance de l'onduleur,
- température de l'eau de refroidissement,
- température de transistor bipolaire à porte isolée (IGBT),
- émission de bruits de l'onduleur,
- courants de filtrage,
- consignes de valeur prédéfinie de l'onduleur,
- paramètres de réseau,
- nombre de tours ou glissement du générateur.

14. Dispositif selon l'une quelconque des revendications 10 à 13 **caractérisé en ce que** des moyens sont prévus pour mémoriser une courbe caractéristique d'un paramètre ou d'un champ caractéristique de plusieurs paramètres et/ou des moyens pour calculer la grandeur de réglage à l'aide au moins d'un paramètre.

15. Dispositif selon l'une quelconque des revendications 10 à 14 **caractérisé en ce que** des moyens sont prévus pour mesurer au moins un paramètre.

16. Dispositif de production de courant comprenant au moins un onduleur (3, 5) et au moins un dispositif selon l'une quelconque des revendications 11 à 15 ainsi que des moyens pour alimenter un réseau avec le courant produit.

17. Dispositif de production de courant selon la revendication 16 **caractérisé en ce qu'**au moins un filtre de réseau (8) est prévu, lequel est accordé sur au moins une première fréquence et au moins sur une autre fréquence.

18. Dispositif de production de courant selon la revendication 16 ou 17 **caractérisé en ce que** le dispositif de production de courant est constitué pour produire du courant à partir de sources d'énergie régénératives.

19. Dispositif de production de courant selon l'une quelconque des revendications 15 à 18 **caractérisé en ce que** le dispositif de production de courant est constitué comme une éolienne.
